(19) **Europäisches Patentamt**
**European Patent Office**
**Office européen des brevets**

(11) **EP 3 417 451 B1**

(12) **EUROPEAN PATENT SPECIFICATION**

(45) Date of publication and mention
of the grant of the patent:
**03.07.2019 Bulletin 2019/27**

(51) Int Cl.:
*G10L 15/32* (2013.01)     *G10L 15/16* (2006.01)

(21) Application number: **17812092.9**

(86) International application number:
**PCT/JP2017/041384**

(22) Date of filing: **10.11.2017**

(87) International publication number:
**WO 2018/207390 (15.11.2018 Gazette 2018/46)**

(54) **SPEECH RECOGNITION SYSTEM AND METHOD FOR SPEECH RECOGNITION**

SPRACHERKENNUNGSSYSTEM UND VERFAHREN ZUR SPRACHERKENNUNG

SYSTÈME ET PROCÉDÉ DE RECONNAISSANCE DE LA PAROLE DESTINÉS À LA
RECONNAISSANCE DE LA PAROLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2017   US 201715592527**

(43) Date of publication of application:
**26.12.2018   Bulletin 2018/52**

(73) Proprietor: **MITSUBISHI ELECTRIC
CORPORATION
Chiyoda-ku
Tokyo 100-8310 (JP)**

(72) Inventors:
 • **HORI, Takaaki**
   **Cambridge, Massachusetts 02139 (US)**
 • **WATANABE, Shinji**
   **Cambridge, Massachusetts 02139 (US)**
 • **HERSHEY, John**
   **Cambridge, Massachusetts 02139 (US)**

(74) Representative: **Pfenning, Meinig & Partner mbB
Patent- und Rechtsanwälte
Theresienhöhe 11a
80339 München (DE)**

(56) References cited:
   US-A1- 2007 136 059     US-A1- 2017 011 738
   US-A1- 2017 053 652

 • **KIM SUYOUN ET AL: "Joint CTC-attention based
   end-to-end speech recognition using multi-task
   learning", 2017 IEEE INTERNATIONAL
   CONFERENCE ON ACOUSTICS, SPEECH AND
   SIGNAL PROCESSING (ICASSP), IEEE, 5 March
   2017 (2017-03-05), pages 4835-4839,
   XP033259329, DOI:
   10.1109/ICASSP.2017.7953075 [retrieved on
   2017-06-16]**
 • **ANDREW ET AL: "Acoustic modelling with
   CD-CTC-SMBR LSTM RNNS", 2015 IEEE
   WORKSHOP ON AUTOMATIC SPEECH
   RECOGNITION AND UNDERSTANDING (ASRU),
   IEEE, 13 December 2015 (2015-12-13), pages
   604-609, XP032863602, DOI:
   10.1109/ASRU.2015.7404851 [retrieved on
   2016-02-10]**
 • **TAKAAKI HORI ET AL: "Joint CTC/attention
   decoding for end-to-end speech recognition",
   PROCEEDINGS OF THE 55TH ANNUAL MEETING
   OF THE ASSOCIATION FOR COMPUTATIONAL
   LINGUISTICS (VOLUME 1: LONG PAPERS), 30
   July 2017 (2017-07-30), pages 518-529,
   XP055443757, Stroudsburg, PA, USA DOI:
   10.18653/v1/P17-1048**
 • **LU LIANG ET AL: "On training the recurrent
   neural network encoder-decoder for large
   vocabulary end-to-end speech recognition",
   2016 IEEE INTERNATIONAL CONFERENCE ON
   ACOUSTICS, SPEECH AND SIGNAL
   PROCESSING (ICASSP), IEEE, 20 March 2016
   (2016-03-20), pages 5060-5064, XP032901567,
   DOI: 10.1109/ICASSP.2016.7472641 [retrieved on
   2016-05-18]**

EP 3 417 451 B1

**Description**

**[Technical Field]**

This invention generally relates to a system and a method for speech recognition, and more specifically to a method and system for end-to-end speech recognition.

**[Background Art]**

Automatic speech recognition is currently a mature set of technologies that have been widely deployed, resulting in great success in interface applications such as voice search. However, it is not easy to build a speech recognition system that achieves a high recognition accuracy. One problem is that it requires deep linguistic knowledge on the target language that the system accepts. For example, a set of phonemes, a vocabulary, and a pronunciation lexicon are indispensable for building such a system. The phoneme set needs to be carefully defined by linguists of the language. The pronunciation lexicon needs to be created manually by assigning one or more phoneme sequences to each word in the vocabulary including over 100 thousand words. Moreover, some languages do not explicitly have a word boundary and therefore we may need tokenization to create the vocabulary from a text corpus. Consequently, it is quite difficult for non-experts to develop speech recognition systems especially for minor languages. The other problem is that a speech recognition system is factorized into several modules including acoustic, lexicon, and language models, which are optimized separately. This architecture may result in local optima, although each model is trained to match the other models.

The article "Joint CTC-Attention Based End-to-End Speech Recognition Using Multi-Task Learning" by Suyoun Kim, Takaaki Hori, and Shinji Watanabe describes a training method for end-to-end speech recognition using the Connectionist Temporal Classification (CTC) and the attention encoder-decoder. Improved performance is achieved by training a shared encoder for both CTC and attention encoder-decoder using an auxiliary CTC objective function. Therein, performance is improved and learning is accelerated by using a joint CTC-attention model within the multi-task learning framework. Namely, in addition to the attention model, CTC is used to train the (shared) encoder which provides the input for the attention decoder.

US 2017/0011738 A1 discloses the generation of acoustic models, where a first new network is trained as an acoustic model using the Connectionist Temporal Clarction algorithm and output distributions from the first neural network are obtained for an utterance. A second neural network is then trained as an acoustic model using the output distribution produced by the first neural network as output targets for the second neural network. Finally, an automated speech recognizer is provided which is configured to use the trained second neural network.

**[Summary of Invention]**

End-to-end speech recognition has the goal of simplifying the conventional architecture into a single neural network architecture within a deep learning framework. To address or solve these problems, various techniques have been discussed in some literatures. However, there are still problems including that the basic temporal attention mechanism is too flexible in the sense that it allows extremely non-sequential alignments, resulting deletion and insertion errors, and that it may make the label sequence hypothesis too short with partially missing label sequences or too long with repetitions of the same label sequence.

Some embodiments of the present disclosure are based on recognition that it is possible to reduce label sequence hypotheses obtained with irrelevant alignments and improve recognition accuracy by combining the attention-based probability with CTC based probability for scoring the hypotheses.

A speech recognition system includes an input device to receive voice sounds, one or more processors, and one or more storage devices storing parameters and program modules including instructions executable by the one or more processors which, when executed, cause the one or more processors to perform operations. The operation includes extracting, using an acoustic feature extraction module, an accoustic feature sequence from audio waveform data converted from the voice sounds; encoding the acoustic feature sequence into a hidden vector sequence using an encoder network having encoder network parameters; predicting first output label sequence probabilities by feeding the hidden vector sequence to a decoder network having decoder network parameters; predicting second output label sequence probabilities by a connectionist temporal classification (CTC) module using CTC network parameters and the hidden vector sequence from the encoder network; and searching, using a label sequence search module, for an output label sequence having a highest sequence probability by combining the first and second output label sequence probabilities provided from the decoder network and the CTC module.

Further, some embodiments of the present disclosure provide a method for speech recognition, including extracting, using an acoustic feature extrarction module, an accoustic feature sequence from audio waveform data converted from voice sounds received by an input device; encoding the acoustic feature sequence into a hidden vector sequence using an encoder network acquiring encoder network parameters from one or more storage devices; predicting first output label sequence probabilities by feeding the hidden vector sequence to a decoder network acquiring decoder network parameters from the one or more storage devices; predicting second output label sequence probabilities by a connectionist temporal classification (CTC) module using CTC network parameters and the hidden vector sequence from the encoder network; and searching, using a label sequence search module, for an output label sequence having a highest sequence probability by combining the first and second output label sequence probabilities provided from the decoder network and the CTC module.

The presently disclosed embodiments will be further explained with reference to the attached drawings. The drawings shown are not necessarily to scale, with emphasis instead generally being placed upon illustrating the principles of the presently disclosed embodiments.

**[Brief Description of the Drawings]**

FIG. 1 is a block diagram illustrating an attention-based end-to-end speech recognition method according to a related art.
FIG. 2 is a block diagram illustrating an end-to-end speech recognition module according to embodiments of the present invention.
FIG. 3 is a schematic diagram illustrating neural networks in an end-to-end speech recognition module according to embodiments of the present invention.
FIG. 4 is a block diagram illustrating an end-to-end speech recognition system according to embodiments of the present invention.
FIG. 5 is an evaluation result obtained by performing end-to-end speech recognition for a Japanese task.
FIG. 6 is an evaluation result obtained by performing end-to-end speech recognition for a Mandarin Chinese task.

**[Description of Embodiments]**

While the above-identified drawings set forth presently disclosed embodiments, other embodiments are also contemplated, as noted in the discussion. This disclosure presents illustrative embodiments by way of representation and not limitation.

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process, which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Modules and networks exemplified in the present disclosure may be computer programs, software or instruction codes, which can execute instructions using one or more processors. Modules and networks may be stored in one or more storage devices or otherwise stored into computer readable media such as storage media, computer storage media, or data storage devices (removable and/or non-removable) such as, for example, magnetic disks, optical disks, or tape, in which the computer readable media are accessible from the one or more processors to execute the instructions.

Computer storage media may include volatile and non-volatile, removable and non-removable media implemented in any method or technology for storage of information, such as computer readable instructions, data structures, program modules, or other data. Computer storage media may be RAM, ROM, EEPROM or flash memory, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both using one or more processors. Any such computer storage media may be part of the device or accessible or connectable thereto. Any application or module herein described may be implemented using computer readable/executable instructions that may be stored or otherwise held by such computer readable media.

In the following, discussions will be made on speech recognition before describing embodiments of the present disclosure for clarifying requirements found in a related technology.

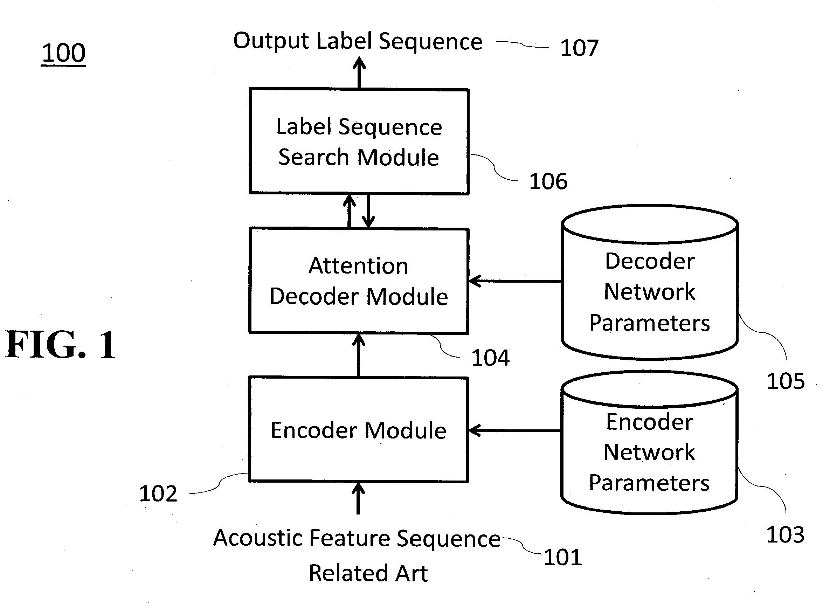

FIG. 1 is a block diagram illustrating an attention-based end-to-end speech recognition module 100 according to a related art.

In the attention-based end-to-end speech recognition module 100, an encoder module 102 first converts acoustic feature sequence 101 into a hidden vector sequence using an encoder network read from encoder network parameters 103. Next, an attention decoder module 104 receives the hidden vector sequence from the encoder network module 102 and a previous label from a label sequence search module 106, and computes a posterior probability distribution of the next label for the previous label using a decoder network read from decoder network parameters 105, where labels can be letters, syllables, words or any units that represent a target language, but letters are widely used. The label sequence search module 106 finds the label sequence with the highest sequence probability using posterior probability distributions given by the attention decoder module 104, where the posterior probability of label sequence is computed as a product of the posterior probabilities of labels in the sequence.

However, the attention-based approach includes a major problem. The attention decoder module 104 uses an attention mechanism to find an alignment between each element of the output label sequence and the hidden vectors generated by the encoder module 102 for acoustic features. At each output position, the decoder module 104 computes a matching score between its state vector and the hidden vectors of the encoder module 102 at each input frame, to form a temporal alignment distribution, which is then used to extract an average of the corresponding encoder hidden vectors. This basic temporal attention mechanism is too flexible in the sense that it allows extremely non-sequential alignments, increasing inaccuracy of speech recognition.

Some embodiments of the invention are based on recognition that it is possible to reduce label sequence hypotheses obtained with irrelevant alignments, which are selected for system output, by combining the attention-based probability with CTC based probability for scoring the hypotheses.

According to embodiments of the present disclosure, it becomes possible to incorporate a rigorous constraint by using CTC-based probabilities into the decoding process of the attention-based end-to-end speech recognition. Since CTC permits an efficient computation of a strictly monotonic alignment using dynamic programming, the posterior probability of label sequence with an irrelevant non-monotonic alignment can be lowered than those with other alignments.

Embodiments of the present disclosure also provide that each label sequence hypothesis is scored with not only the attention-based probability but also the CTC-based probability, where the score may be a linear combination of logarithmic posterior probabilities computed by an attention decoder and CTC. Consequently, it becomes possible that the end-to-end speech recognition of the present disclosure selects the best hypothesis in terms of both the similarity and the alignment correctness between the output labels and the acoustic features, which improves the recognition accuracy. Thus, the system and a method for end-to-end speech recognition according to embodiments of the present disclosure can alleviate the issued discussed above.

The end-to-end speech recognition apparatus can receive an acoustic feature sequence from an input device such as a microphone, a hard disk drive and a computer network. The apparatus performs the end-to-end speech recognition method using encoder network parameters, decoder network parameters, and CTC network parameters for the acoustic feature sequence, and outputs the predicted label sequence to an output device such as a hard disk drive, display monitor, and computer network.

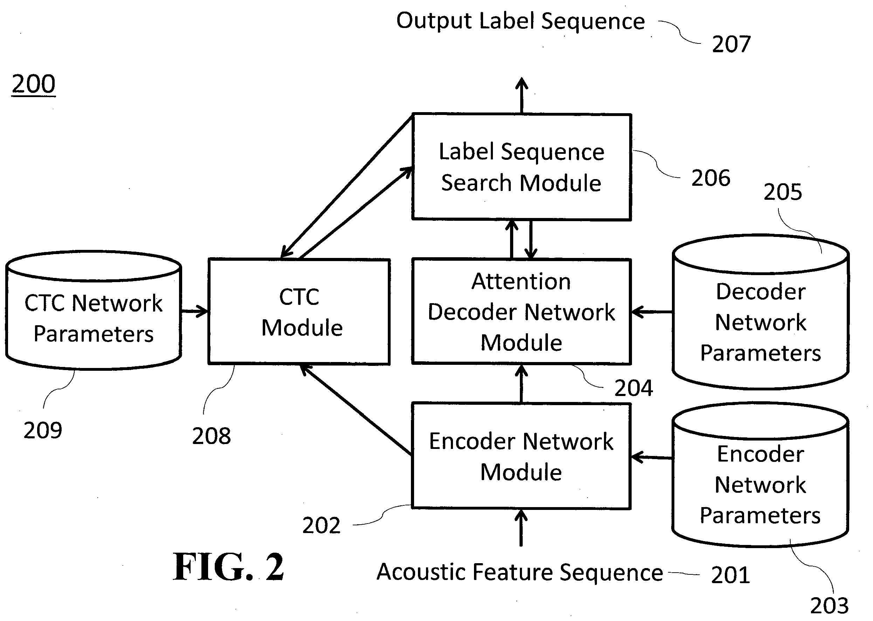

FIG. 2 is a block diagram illustrating an end-to-end speech recognition module 200 according to embodiments of the present invention.

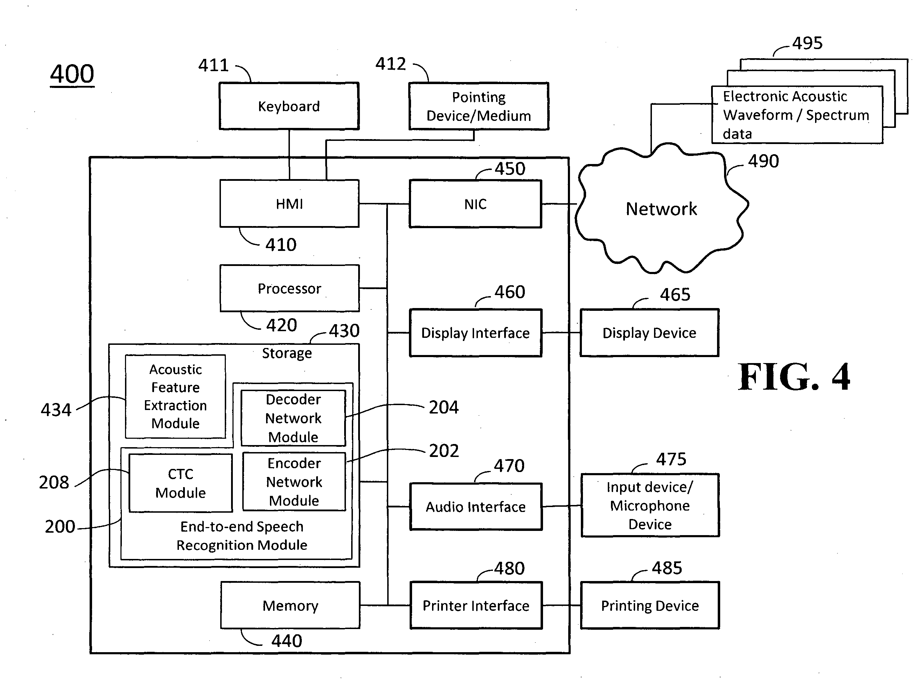

The end-to-end speech recognition module 200 includes an encoder network module 202, encoder network parameters 203, an attention decoder module 204, decoder network parameters 205, a label sequence search module 206, a CTC module 208, and CTC network parameters 209. The encoder network parameters 203, the decoder network parameters 205 and the CTC network parameters 209 are respectively stored in a storage device to provide parameters to corresponding modules 202, 204 and 208. An acoustic feature sequence 201 is extracted from audio waveform data or spectrum data using an acoustic feature extraction module 434 in FIG. 4. The audio waveform data or spectrum data may be stored in a storage device and provided to the encoder network module 202. The audio waveform data or spectrum data may be obtained via an input device 475 in FIG. 4 using a digital signal processing module (not shown) receiving and converting voice sounds into the audio waveform or spectrum data. Further, the audio waveform or spectrum data stored in a storage device 430 or memory 440 may be provided to the encoder network module 202. The signal of the voice sounds may be provided via a network 490 in FIG. 4, and the input device 475 may be a microphone device.

The encoder network module 202 includes an encoder network that converts acoustic feature sequence 201 into a hidden vector sequence using the encoder network reading parameters from encoder network parameters 203.

An attention mechanism using an attention decoder network 204 is described as follows. The attention decoder network module 204 includes a decoder network. The attention decoder network module 204 receives the hidden vector sequence from the encoder network module 202 and a previous label from the label sequence search module 206, and then computes first posterior probability distributions of the next label for the previous label using the decoder network reading parameters from decoder network parameters 205. The attention decoder network module 204 provides the first posterior probability distribution to the label sequence search module 206. The CTC module 208 receives the hidden vector sequence from the encoder network module 202 and the previous label from the label sequence search module 206, and computes second posterior probability distributions of the next label sequence using the CTC network parameters 209 and a dynamic programming technique. After the computation, the CTC module 208 provides the second posterior probability distributions to the label sequence search module 206.

The label sequence search module 206 finds the label sequence with the highest sequence probability using the first and second posterior probability distributions provided from the attention decoder network module 204 and the CTC module 208. The first and second posterior probabilities of label sequence computed by the attention decoder network module 204 and the CTC module 208 are combined into one probability. In this case, the combination of the computed posterior probabilities may be performed based on the linear combination. With the end-to-end speech recognition module 200, it becomes possible to take the CTC probabilities into account to find a better aligned hypothesis to the input acoustic feature sequence.

**Attention-based end-to-end speech recognition**

End-to-end speech recognition is generally defined as a problem to find the most probable label sequence $\hat{Y}$ given input acoustic feature sequence $X$, i.e.

$$\hat{Y} = \operatorname*{argmax}_{Y \in \mathcal{U}^*} p(Y|X), \tag{1}$$

where $\mathcal{U}^*$ denotes a set of possible label sequences given a set of pre-defined letters $\mathcal{U}$.

In end-to-end speech recognition, $p(Y|X)$ is computed by a pre-trained neural network without pronunciation lexicon and language model. In the attention-based end-to-end speech recognition of a related art, the neural network consists of an encoder network and a decoder network.

An encoder module 102 includes an encoder network used to convert acoustic feature sequence $X = x_1, \dots , x_T$ into hidden vector sequence $\mathbf{H} = \mathbf{h}_1, \dots , \mathbf{h}_T$ as

$$\mathbf{H} = \mathrm{Encoder}(X), \tag{2}$$

where function Encoder($X$) may consist of one or more recurrent neural networks (RNNs), which are stacked. An RNN may be implemented as a Long Short-Term Memory (LSTM), which has an input gate, a forget gate, an output gate and a memory cell in each hidden unit. Another RNN may be a bidirectional RNN (BRNNs) or a bidirectional LSTM (BLSTM). A BLSTM is a pair of LSTM RNNs, one is a forward LSTM and the other is a backward LSTM. A Hidden vector of the BLSTM is obtained as a concatenation of hidden vectors of the forward and backward LSTMs.

With the forward LSTM, the forward t-th hidden vector $h_t^F$ is computed as

$$h_t^F = o_t^F \odot \tanh(c_t^F) \tag{3}$$

$$o_t^F = \sigma(W_{xo}^F x_t + W_{xc}^F h_{t-1}^F + b_o^F) \tag{4}$$

$$c_t^F = f_t^F \odot c_{t-1}^F + i_t^F \odot \tanh(W_{xc}^F x_t + W_{hc}^F h_{t-1}^F + b_c^F) \quad (5)$$

$$f_t^F = \sigma(W_{xf}^F x_t + W_{hg}^F h_{t-1}^F + b_f^F) \quad (6)$$

$$i_t^F = \sigma(W_{xi}^F x_t + W_{hi}^F h_{t-1}^F + b_i^F). \quad (7)$$

where $\sigma(\cdot)$ is the element-wise sigmoid function, $\tanh(\cdot)$ is the element-wise hyperbolic tangent function, and $i_t^F$, $f_t^F$, of and are the input gate, forget gate, output gate, and cell activation vectors for $x_t$, respectively. $\odot$ denotes the element-wise multiplication between vectors. The weight matrices $W_{zz}^F$ and the bias vector $b_z^F$ are the parameters of the LSTM, which are identified by the subscript $z \in \{x, h, i, f, o, c\}$. For example, $W_{hi}^F$ is the hidden-to-input gate matrix and $W_{xo}^F$ is the input-to-output gate matrix. The hidden vector $h_t^F$ is obtained recursively from the input vector $x_t$ and the previous hidden vector $h_{t-1}^F$, where $h_0^F$ is assumed to be a zero vector.

With the backward LSTM, the backward t-th hidden vector $h_t^B$ is computed as

$$h_t^B = o_t^B \odot \tanh(c_t^B) \quad (8)$$

$$o_t^B = \sigma(W_{xo}^B x_t + W_{xc}^B h_{t+1}^B + b_o^B) \quad (9)$$

$$c_t^B = f_t^B \odot c_{t+1}^B + i_t^B \odot \tanh(W_{xc}^B x_t + W_{hc}^B h_{t+1}^B + b_c^B) \quad (10)$$

$$f_t^B = \sigma(W_{xf}^B x_t + W_{hg}^B h_{t+1}^B + b_f^B) \quad (11)$$

$$i_t^B = \sigma(W_{xi}^B x_t + W_{hi}^B h_{t+1}^B + b_i^B). \quad (12)$$

where $i_t^B$, $f_t^B$, $o_t^B$ and $c_t^B$ are the input gate, forget gate, output gate, and cell activation vectors for $x_t$, respectively. The weight matrices $W_{zz}^B$ and the bias vector $b_z^B$ are the parameters of the LSTM, which are identified by the subscript in the same manner as the forward LSTM. The hidden vector $h_t^B$ is obtained recursively from the input vector $x_t$ and the succeeding hidden vector $h_{t+1}^B$, where $h_{T+1}^B$ is assumed to be a zero vector.

The hidden vector of the BLSTM is obtained by concatenating the forward and backward hidden vectors as

$$\mathbf{h}_t = [h_t^{F^\top}, h_t^{B^\top}]^\top \quad (13)$$

where T denotes the transpose operation for the vectors assuming all the vectors are column vectors. $W_{zz}^{F}$, $b_{z}^{F}$, $W_{zz}^{B}$, and $b_{z}^{B}$ are considered the parameters of the BLSTM.

To obtain better hidden vectors, we may stack multiple BLSTMs by feeding the hidden vectors of the first BLSTM to the second BLSTM, then feeding the hidden vectors of the second BLSTM to the third BLSTM, and so on. If $\mathbf{h}_t{'}$ is a hidden vector obtained by one BLSTM, we assume $x_t = \mathbf{h}_t{'}$ when feeding it to another BLSTM. To reduce the computation, it may feed only every second hidden vectors of one BLSTM to another BLSTM. In this case, the length of output hidden vector sequence becomes the half of the length of input acoustic feature sequence.

An attention decoder module 104 includes a decoder network used to compute label sequence probability $p(Y|X)$ using hidden vector sequence $\mathbf{H}$. Suppose $Y$ is an $L$-length label sequence $y_1, y_2, ..., y_L$. To compute $p(Y|X)$ efficiently, the probability can be factorized by a probabilistic chain rule as

$$p(Y|X) = \prod_{l=1}^{L} p\left(y_l | y_1, \cdots, y_{l-1}, X\right), \qquad (14)$$

and each label probability $p(y_l|y_1, \cdots, y_{l-1}, X)$ is obtained from a probability distribution over labels, which is estimated using the decoder network as

$$p(\mathbf{y}|y_1, \cdots, y_{l-1}, X) = \mathrm{Decoder}(\mathbf{r}_l, \mathbf{q}_{l-1}), \qquad (15)$$

where $\mathbf{y}$ is a random variable representing a label, $\mathbf{r}_l$ is called a content vector, which has content information of $\mathbf{H}$. $\mathbf{q}_{l-1}$ is a decoder state vector, which contains contextual information of the previous labels $y_1,...,y_{l-1}$ and the previous content vectors $\mathbf{r}_0,...,\mathbf{r}_{l-1}$. Accordingly, the label probability is obtained as the probability of $\mathbf{y} = y_l$ given the context, i.e.

$$p(y_l | y_1, \cdots, y_{l-1}, X) = p(\mathbf{y} = y_l | y_1, \cdots, y_{l-1}, X) \qquad (16)$$

The content vector $\mathbf{r}_l$ is usually given as a weighted sum of hidden vectors of the encoder network, i.e.

$$\mathbf{r}_l = \sum_{t} a_{lt}\, \mathbf{h}_t, \qquad (17)$$

where $a_{lt}$ is called an attention weight that satisfies $\sum_t a_{lt} = 1$. The attention weights can be computed using $\mathbf{q}_{l-1}$ and $\mathbf{H}$ as

$$e_{lt} = w^{\top}\tanh(W\mathbf{q}_{l-1} + V\mathbf{h}_t + Uf_{lt} + b) \qquad (18)$$

$$\mathbf{f}_l = F * \mathbf{a}_{l-1} \qquad (19)$$

$$a_{lt} = \frac{\exp(e_{lt})}{\sum_{\tau=1}^{T} \exp(e_{l\tau})} \qquad (20)$$

where $W, V, F$ and $U$ are matrices, and w and b are vectors, which are trainable parameters of the decoder network. $e_{lt}$ is a matching score between the $(l - 1)$-th state vector $\mathbf{q}_{l-1}$ and the t-th hidden vector $\mathbf{h}_t$ to form a temporal alignment

distribution $\mathbf{a}_l = \{a_{lt}|t = 1,...,T\}$. $\mathbf{a}_{l-1}$ represents the previous alignment distribution $\{a_{(l-1)t}|t = 1,...,T\}$ used for predicting the previous label $y_{l-1}$. $\mathbf{f}_l = \{f_{lt}|t = 1,...,T\}$ is the convolution result with F for $\mathbf{a}_{l-1}$, which is used to reflect the previous alignment to the current alignment. "*" denotes a convolution operation.

The label probability distribution is obtained with state vector $\mathbf{q}_{l-1}$ and content vector $\mathbf{r}_l$ as

$$\text{Decoder}(\mathbf{r}_l, \mathbf{q}_{l-1}) = \text{softmax}(W_{qy}\mathbf{q}_{l-1} + W_{ry}\mathbf{r}_l + b_y), \quad (21)$$

where $W_{qy}$ and $W_{ry}$ are matrices and $b_y$ is a vector, which are trainable parameters of the decoder network. The softmax() function is computed as

$$\text{softmax}(v) = \left.\frac{\exp(v[i])}{\sum_{j=1}^{K}\exp(v[j])}\right|_{i=1,...,K} \quad (22)$$

for a $K$-dimensional vector $v$, where $v[i]$ indicates the $i$-th element of $v$.

After that, decoder state vector $\mathbf{q}_{l-1}$ is updated to $\mathbf{q}_l$ using an LSTM as

$$\mathbf{q}_l = o_l^D \odot \tanh(c_l^D) \quad (23)$$

$$o_l^D = \sigma(W_{xo}^D\mathbf{x}_l^D + W_{xc}^D\mathbf{q}_{l-1} + b_o^D) \quad (24)$$

$$c_l^D = f_l^D \odot c_{l-1}^D + i_l^D \odot \tanh(W_{xc}^D\mathbf{x}_l^D + W_{hc}^D\mathbf{q}_{l-1} + b_c^D) \quad (25)$$

$$f_l^D = \sigma(W_{xf}^D\mathbf{x}_l^D + W_{hg}^D\mathbf{q}_{l-1} + b_f^D) \quad (26)$$

$$i_l^D = \sigma(W_{xi}^D\mathbf{x}_l^D + W_{hi}^D\mathbf{q}_{l-1} + b_i^D). \quad (27)$$

where $i_l^D$, $f_l^D$, $o_l^D$ and $c_l^D$ are the input gate, forget gate, output gate, and cell activation vectors for input vector $\mathbf{x}_l$, respectively. The weight matrices $W_{zz}^D$ and the bias vector $b_z^D$ are the parameters of the LSTM, which are identified by the subscript in the same manner as the forward LSTM. The state vector $\mathbf{q}_l$ is obtained recursively from the input vector $\mathbf{x}_l^D$ and the previous state vector $\mathbf{q}_{l-1}$, where $\mathbf{q}_0$ is computed assuming $\mathbf{q}_{-1} = \mathbf{0}$, $y_0 = <$ sos $>$, and $\mathbf{a}_0 = \mathbf{1/T}$. For the decoder network, the input vector xf is given as a concatenated vector of label $y_l$ and content vector $\mathbf{r}_l$, which can be obtained as $\mathbf{x}_l^D = [\text{Embed}(y_l)^{\mathsf{T}}, \mathbf{r}_l^{\mathsf{T}}]^{\mathsf{T}}$, where Embed($\cdot$) denotes label embedding, that converts a label into a fixed dimensional vector.

In attention-based speech recognition, estimating appropriate attention weights is very important to predict correct labels, since content vector $\mathbf{r}_l$ is deeply dependent on alignment distribution $\mathbf{a}_l$ as shown in Eq. (17). In speech recognition, the content vector represents acoustic information in the encoder's hidden vectors around the peak of the alignment distribution, and the acoustic information is the most important clue to predict label $y_l$. Nevertheless, the attention mechanism often provides irregular alignment distributions because there is no explicit constraint so that the peak of the distribution proceeds monotonically along time when incrementally predicting $y_l$. In speech recognition, the alignment between input sequence and output sequence should be monotonic in general. Although the convolution feature $f_{lt}$ alleviates generating irregular alignments, it is not strong enough to avoid them.

**Joint CTC/attention based end-to-end speech recognition**

In a method for performing end-to-end speech recognition using the end-to-end speech recognition module 200 according to embodiments of the invention, CTC forward probabilities Eq. (34) are combined with attention-based probabilities in Eq. (14) to obtain more accurate label sequence probabilities.

The CTC module 208 computes a CTC forward probability of label sequence $Y$ given hidden vector sequence $H$. Note that the CTC formulation uses L-length label sequence $Y = \{y_l \in \mathcal{U} | l = 1, \cdots, L\}$ with a set of distinct labels $\mathcal{U}$. By introducing framewise label sequence with an additional "blank" label, $Z = \{z_t \in \mathcal{U} \cup \{\mathbf{b}\} | t = 1, \cdots, T\}$, where $\mathbf{b}$ represents a blank label. By using the probabilistic chain rule and conditional independence assumption, the posterior distribution $p(Y|X)$ is factorized as follows:

$$
\begin{aligned}
p(Y|X) \\
\approx \sum_Z p(Y|Z)p(Z|X) \approx \sum_Z p(Y|Z) \prod_t p(z_t|X) \\
\approx \sum_Z \prod_t p(z_t|z_{t-1}, Y)p(z_t|X),
\end{aligned}
\tag{28}
$$

where $p(z_t|z_{t-1}|Y)$ is considered a label transition probability including blank labels. $p(z_t|X)$ is the framewise posterior distribution conditioned on the input sequence $X$, and modeled by using bidirectional long short-term memory (BLSTM):

$$
p(z_t|X) = \text{softmax}(W_{hy}^{CTC}\mathbf{h}_t + b_y^{CTC}),
\tag{29}
$$

where $\mathbf{h}_t$ is obtained with an encoder network. $W_{hy}^{CTC}$ is a matrix and $b_y^{CTC}$ is a vector, which are trainable parameters of CTC. Although Eq. (28) has to deal with a summation over all possible $Z$, it is efficiently computed by using a forward algorithm.

The forward algorithm for CTC is performed as follows. We use an extended label sequence $Y' = y'_1, y'_2,...,y'_{2L+1} = \mathbf{b}, y_1, \mathbf{b}, y_2,...,\mathbf{b}, y_L, \mathbf{b}$ of length $2L + 1$, where a blank label "b" is inserted between each pair of adjacent labels. Let $\alpha_t(s)$ be a forward probability, which represents the posterior probability of label sequence $y_1,...,y_l$ for time frames 1,...,t, where s indicates the position in the extended label sequence $Y'$.

For initialization, we set

$$
\alpha_1(1) = p(z_1 = \mathbf{b}|X) \tag{30}
$$

$$
\alpha_1(2) = p(z_1 = y_1|X) \tag{31}
$$

$$
\alpha_1(s) = 0, \forall s > 2. \tag{32}
$$

For $t = 2$ to $T$, $\alpha_t(s)$ is computed recursively as

$$
\alpha_t(s) = \begin{cases} \overline{\alpha}_t(s)p(z_t = y'_s|X) & \text{if } y'_s = \mathbf{b} \text{ or } y'_{s-2} = y'_s \\ (\overline{\alpha}_t(s) + \alpha_{t-1}(s-2))p(z_t = y'_s|X) & \text{otherwise} \end{cases}, \tag{33}
$$

where

$$\overline{\alpha}_t(s) \quad = \alpha_{t-1}(s) + \alpha_{t-1}(s-1). \tag{34}$$

Finally, the CTC-based label sequence probability is obtained as

$$p(Y|X) = \alpha_T(2L+1) + \alpha_T(2L). \tag{35}$$

The framewise label sequence $Z$ represents an alignment between input acoustic feature sequence $X$ and output label sequence $Y$. When computing the forward probability, the recursion of Eq. (33) enforces $Z$ to be monotonic and does not allow looping or big jumps of s in alignment $Z$, because the recursion to obtain $\alpha_t(s)$ only considers at most $\alpha_{t-1}(s)$, $\alpha_{t-1}(s-1)$, $\alpha_{t-1}(s-2)$. This means that when time frame proceeds one frame, the label changes from the previous label or blank, or keeps the same label. This constraint plays a role of the transition probability $p(z_t|z_{t-1},Y)$ that enforces alignments to be monotonic. Hence, $p(Y|X)$ can be 0 or a very small value when it is computed based on irregular (non-monotonic) alignments.

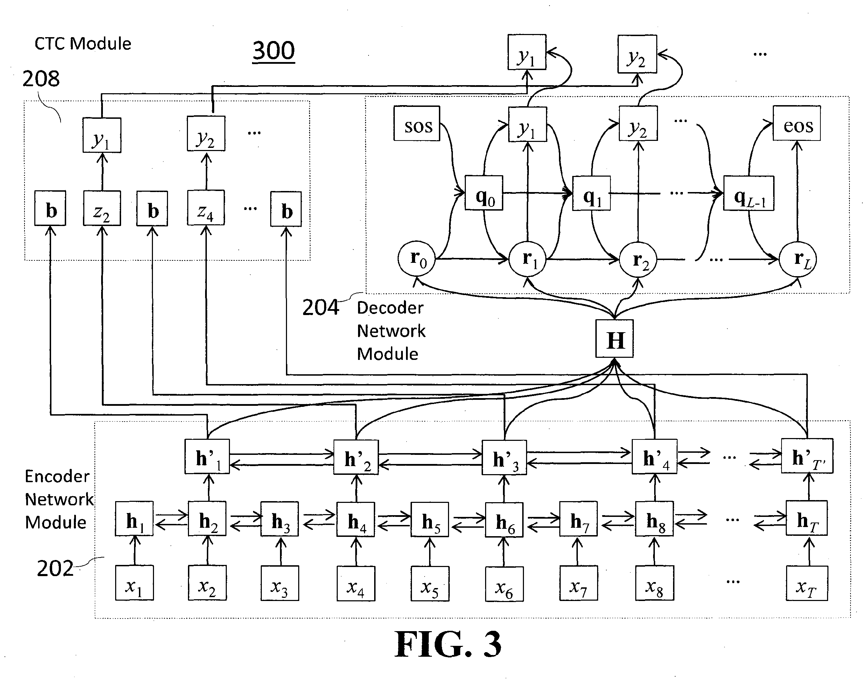

FIG. 3 is a schematic diagram illustrating a combined neural network module 300 according to embodiments of the present invention. The combined neural network 300 includes an encoder network module 202, an attention decoder network module 204 and a CTC module 208. Each arrow represents a data transfer with or without transformation, and each square or circle node represents a vector or a predicted label. Acoustic feature sequence $X = x_1,...,x_T$ is fed to the encoder network module 202, where two BLSTMs are stacked and every second hidden vectors of the first BLSTM are fed to the second BLSTM. The output of the encoder module 202 results in hidden vector sequence $\mathbf{H} = h'_1, h'_2,...,h'_{T'}$, where $T' = T/2$. Then, $\mathbf{H}$ is fed to the CTC module 208 and the decoder network module 204. The CTC-based and attention-based sequence probabilities are computed with the CTC module 208 and the decoder network module 204, respectively, and combined to obtain the label sequence probability.

In embodiments of the present invention, the probabilities may be combined in log domain as

$$\log p(Y|X) = \lambda \log p_{\mathrm{ctc}}(Y|X) + (1-\lambda)\log p_{\mathrm{att}}(Y|X), \tag{36}$$

where $p_{\mathrm{ctc}}(Y|X)$ is the CTC-based label sequence probability in Eq. (35) and $p_{\mathrm{att}}(Y|X)$ is the attention-based label sequence probability in Eq. (14). $\lambda$ is a scaling factor to balance CTC-based and attention-based probabilities.

**Label Sequence Search**

Label sequence search module 206 finds the most probable label sequence $\hat{Y}$ according to label sequence probability distribution $p(Y|X)$, i.e.

$$\hat{Y} = \underset{Y \in \mathcal{U}^*}{\mathrm{argmax}}\, p(Y|X). \tag{37}$$

In attention-based speech recognition of a prior art, $p(Y|X)$ is assumed to be $p_{\mathrm{att}}(Y|X)$. In embodiments of the present invention, $p(Y|X)$ is computed by a combination of label sequence probabilities as in Eq. (36), i.e. it finds $\hat{Y}$ according to

$$\hat{Y} = \underset{Y \in \mathcal{U}^*}{\mathrm{argmax}}\{\lambda \log p_{\mathrm{ctc}}(Y|X) + (1-\lambda)\log p_{\mathrm{att}}(Y|X)\}. \tag{38}$$

However, it is difficult to enumerate all possible label sequences for $Y$ and compute $p(Y|X)$, because the number of possible label sequences increases exponentially to the length of the sequence. Therefore, a beam search technique is usually used to find $\hat{Y}$, in which shorter label sequence hypotheses are generated first, and only a limited number of hypotheses, which have a higher score than others, are extended to obtain longer hypotheses. Finally, the best label sequence hypothesis is selected in the complete hypotheses that reached the end of the sequence.

In the beam search process, the decoder needs to compute a score for each label sequence hypothesis. However, it is nontrivial to combine the CTC and attention-based scores in the beam search, because the attention decoder performs it output-label-synchronously while CTC performs it frame-synchronously. To incorporate the CTC probabilities in the hypothesis score, label sequence search module 206 according to embodiments of the present invention may use either of two methods described below.

**(1) Rescoring method**

The first method is a two-pass approach. The first pass finds a set of complete hypotheses using the beam search, wherein only attention-based score is considered. The second pass rescores the complete hypotheses using the combination of CTC and attention probabilities as shown in Eq. (36), and finds the best label sequence hypothesis.
With the rescoring method, label sequence search module 206 finds $\hat{Y}$ as follows. Let $\Omega_l$ be a set of partial hypotheses of the length $l$. At the beginning of the first-pass beam search, $\Omega_0$ contains only one hypothesis with the starting symbol <sos>. For $l = 1$ to $L_{max}$, each partial hypothesis in $\Omega_{l-1}$ is expanded by appending possible single labels, and the new hypotheses are stored in $\Omega_l$, where $L_{max}$ is the maximum length of the hypotheses to be searched. The score of each new hypothesis is computed in the log domain as

$$\psi_{att}(h) = \psi_{att}(g) + \log p_{att}(y|g, X), \qquad (39)$$

where $g$ is a partial hypothesis in $\Omega_{l-1}$, $y$ is a single label appended to $g$, and $h$ is the new hypothesis, i.e. $h = g \cdot y$. The probability $p_{att}(y|g)$ can be computed by Eq. (16), where we assume $\psi_{att}(<sos>) = 0$.
If y is a special label that represents the end of a sequence <eos>, $h$ is added to $\hat{\Omega}$ but not $\Omega_l$, where $\hat{\Omega}$ denotes a set of complete hypotheses.
The second path finds $\hat{Y}$ based on the combination of CTC and attention scores as

$$\hat{Y} = \underset{h \in \hat{\Omega}}{\arg\max}\{\lambda\psi_{ctc}(h, X) + (1 - \lambda)\psi_{att}(h)\}, \qquad (40)$$

where CTC score $\psi_{ctc}(h, X)$ is computed as $\log p_{ctc}(h|X)$.
In the beam search process, $\Omega_l$ is allowed to hold only a limited number of hypotheses with higher scores, and the other hypotheses are pruned to improve the search efficiency.
A more concrete procedure of the rescoring method is summarized as follows.

**Input:** $X, L_{\max}$

**Output:** $\hat{Y}$

1: $\Omega_0 \leftarrow \{<\text{sos}>\}$

2: $\hat{\Omega} \leftarrow \emptyset$

3: $\psi_{\text{att}}(<\text{sos}>) = 0$

4: **for** $l = 1 \ldots L_{\max}$ **do**

5:    $\Omega_l \leftarrow \emptyset$

6:    **while** $\Omega_{l-1} \neq \emptyset$ **do**

7:       $g \leftarrow \text{Head}(\Omega_{l-1})$

8:       $\text{Dequeue}(\Omega_{l-1})$

9:       **for** each $y \in \mathcal{U} \cup \{<\text{eos}>\}$ **do**

10:          $h \leftarrow g \cdot y$

11:          $\psi_{\text{att}}(h) \leftarrow \psi_{\text{att}}(g) + \log p_{\text{att}}(y|g, X)$

12:          **if** $y = <\text{eos}>$ **then**

13:             $\text{Enqueue}(\hat{\Omega}, h)$

14:          **else**

15:             $\text{Enqueue}(\Omega_l, h)$

16:             **if** $|\Omega_l| > beamWidth$ **then**

17:                $h_{\min} \leftarrow \arg\min_{h \in \Omega_l} \psi_{\text{att}}(h)$

18:                $\text{Remove}(\Omega_l, h_{\min})$

19:             **end if**

20:          **end if**

21:       **end for**

22:    **end while**

23: **end for**

24: $\hat{Y} \leftarrow \arg\max_{h \in \hat{\Omega}} \{\lambda \psi_{\text{ctc}}(h, X) + \psi_{\text{att}}(h)\}$

In this procedure, $\Omega_l$ and $\hat{\Omega}$ are implemented as queues that accept partial hypotheses of the length $l$ and complete hypotheses, respectively. In lines 1-2, $\Omega_0$ and $\hat{\Omega}$ are initialized as empty queues. In line 3, the score for the initial hypothesis <sos> is set to 0. In lines 4-23, each partial hypothesis $g$ in $\Omega_{l-1}$ is extended by each label $y$ in label set $\mathcal{U} \cup \{< \text{eos} >\}$, where operations Head($\Omega$) returns the first hypothesis in queue $\Omega$, and Dequeue($\Omega$) removes the first hypothesis from the queue.

Each extended hypothesis $h$ is scored using the attention decoder network in line 11. After that, if $y =< \text{eos} >$, the hypothesis $h$ is assumed to be complete and stored in $\hat{\Omega}$ in line 13, where Enqueue($\hat{\Omega},h$) is an operation that adds $h$ to $\hat{\Omega}$. If $y \# < \text{eos} >$, $h$ is stored in $\Omega_l$ in line 15, where the number of hypotheses in $\Omega_l$, i.e. $|\Omega_l|$, is compared with a predetermined number $beamWidth$ in line 16. If $|\Omega_l|$ exceeds $beamWidth$, the hypothesis with the minimum score $h_{\min}$ in $\Omega_l$ is removed from $\Omega_l$ in lines 17-18, where Remove($\Omega_l$, $h_{\min}$) is an operation that removes $h_{\min}$ from $\Omega_l$. Finally, $\hat{Y}$ is selected as the best hypothesis in line 24.

**(2) One-pass method**

The second method is a one-pass approach, which computes the score of each partial hypothesis as the combination of CTC and attention-based probabilities during the beam search. Here, we utilize the CTC prefix probability defined as the cumulative probability of all label sequences that have $h$ as their prefix:

$$p_{\text{ctc}}(h, \ldots | X) \triangleq \sum_{v \in (\mathcal{U} \cup \{<\text{eos}>\})^+} p_{\text{ctc}}(h \cdot v | X), \tag{42}$$

and we define the CTC score as

$$\psi_{\text{ctc}}(h, X) \triangleq \log p_{\text{ctc}}(h, \ldots | X), \tag{43}$$

where v represents all possible label sequences except the empty string. The CTC score cannot be obtained recursively as in Eq. (39), but it can be computed efficiently by keeping the forward probabilities over the input time frames for each partial hypothesis. Then it is combined with $\psi_{\text{att}}(h)$ using the scaling factor $\lambda$.

With the one-pass method, label sequence search module 206 finds $\hat{Y}$ according to the following procedure.

**Input:** $X, L_{\max}$
**Output:** $\hat{Y}$
1: $\Omega_0 \leftarrow \{<\text{sos}>\}$
2: $\hat{\Omega} \leftarrow \emptyset$
3: $\psi_{\text{att}}(<\text{sos}>) = 0$
4: **for** $l = 1 \ldots L_{\max}$ **do**
5:    $\Omega_l \leftarrow \emptyset$
6:    **while** $\Omega_{l-1} \neq \emptyset$ **do**
7:       $g \leftarrow \text{Head}(\Omega_{l-1})$
8:       $\text{Dequeue}(\Omega_{l-1})$
9:       **for each** $y \in \mathcal{U} \cup \{<\text{eos}>\}$ **do**
10:          $h \leftarrow g \cdot y$
11:          $\psi_{\text{att}}(h) \leftarrow \psi_{\text{att}}(g) + \log p_{\text{att}}(y | g, X)$
12:          $\psi_{\text{joint}}(h) \leftarrow \lambda \psi_{\text{ctc}}(h, X) + (1 - \lambda)\psi_{\text{att}}(h)$
13:          **if** $y = <\text{eos}>$ **then**
14:             $\text{Enqueue}(\hat{\Omega}, h)$
15:          **else**
16:             $\text{Enqueue}(\Omega_l, h)$
17:             **if** $|\Omega_l| > \textit{beamWidth}$ **then**
18:                $h_{\min} \leftarrow \arg\min_{h \in \Omega_l} \psi_{\text{joint}}(h)$
19:                $\text{Remove}(\Omega_l, h_{\min})$
20:             **end if**
21:          **end if**
22:       **end for**
23:    **end while**
24: **end for**
25: $\hat{Y} \leftarrow \arg\max_{h \in \hat{\Omega}} \psi_{\text{joint}}(h)$

The differences from the rescoring method are line 12, in which it computes a joint score $\psi_{\text{joint}}(h)$ using CTC score $\psi_{\text{ctc}}(h, X)$ and attention-based score $\psi_{\text{att}}(h)$, and line 18, in which the joint score $\psi_{\text{joint}}(h)$ is used to select $h_{\min}$.

CTC score $\psi_{\text{ctc}}(h, X)$ can be computed using a modified forward algorithm. Let $\gamma_t^{(n)}(h)$ and $\gamma_t^{(b)}(h)$ be

the forward probabilities of the hypothesis $h$ over the time frames $1...t$, where the superscripts $(n)$ and $(b)$ denote different cases in which all CTC paths end with a nonblank or blank label, respectively. Before starting the beam search, $\gamma_t^{(n)}(\cdot)$ and $\gamma_t^{(b)}(\cdot)$ are initialized for $t = 1,...,T$ as

$$\gamma_t^{(n)}(<\text{sos}>) = 0, \tag{44}$$

$$\gamma_t^{(b)}(<\text{sos}>) = \prod_{\tau=1}^{t} \gamma_{\tau-1}^{(b)}(<\text{sos}>)p(z_\tau = \mathbf{b}|X), \tag{45}$$

where we assume that $\gamma_0^{(b)}(<\text{sos}>) = 1$ and $\mathbf{b}$ is a blank label. Note that the time index $t$ and input length $T$ may differ from those of the input utterance $X$ owing to the subsampling technique for the encoder. The CTC score function can be implemented as follows.

**Input:** $h, X$
**Output:** $\psi_{\text{ctc}}(h, X)$
1: $g, y \leftarrow h$ $\lhd$ split $h$ into the last label $y$ and the rest $g$
2: **if** $y = \texttt{<eos>}$ **then**
3: **return** $\log\{\gamma_T^{(n)}(g) + \gamma_T^{(b)}(g)\}$
4: **else**
5: $\gamma_1^{(n)}(h) \leftarrow \begin{cases} p(z_1 = y|X) & \text{if } g = \texttt{<sos>} \\ 0 & \text{otherwise} \end{cases}$
6: $\gamma_1^{(b)}(h) \leftarrow 0$
7: $\Psi \leftarrow \gamma_1^{(n)}(h)$
8: **for** $t = 2 \ldots T$ **do**
9: $\Phi \leftarrow \gamma_{t-1}^{(b)}(g) + \begin{cases} 0 & \text{if last}(g) = y \\ \gamma_{t-1}^{(n)}(g) & \text{otherwise} \end{cases}$
10: $\gamma_t^{(n)}(h) \leftarrow \left(\gamma_{t-1}^{(n)}(h) + \Phi\right)p(z_t = y|X)$
11: $\gamma_t^{(b)}(h) \leftarrow \left(\gamma_{t-1}^{(b)}(h) + \gamma_{t-1}^{(n)}(h)\right)p(z_t = \mathbf{b}|X)$
12: $\Psi \leftarrow \Psi + \Phi \cdot p(z_t = y|X)$
13: **end for**
14: **return** $\log(\Psi)$
15: **end if**

In this function, the given hypothesis $h$ is first split into the last label $y$ and the rest $g$ in line 1. If $y$ is <eos>, it returns the logarithm of the forward probability assuming that $h$ is a complete hypothesis in line 3. The forward probability of $h$ is given by

$$p_{\text{ctc}}(h|X) = \gamma_T^{(n)}(g) + \gamma_T^{(b)}(g) \tag{46}$$

according to the definition of $\gamma_t^{(n)}(\cdot)$ and $\gamma_t^{(b)}(\cdot)$. If $y$ is not <eos>, it computes the forward probabilities $\gamma_t^{(n)}(h)$ and $\gamma_t^{(b)}(h)$, and the prefix probability $\Psi = p_{\text{ctc}}(h, \dots | X)$ assuming that $h$ is not a complete hypothesis. The initialization and recursion steps for those probabilities are described in lines 5-13. In this function, it is assumed that whenever computing $\gamma_t^{(n)}(h)$, $\gamma_t^{(b)}(h)$ and $\Psi$ in lines 10-12, the probabilities $\gamma_{t-1}^{(n)}(g)$ and $\gamma_{t-1}^{(b)}(g)$ in line 9 have already been obtained through the beam search process because $g$ is a prefix of $h$ such that $|g| < |h|$. Accordingly, the prefix and forward probabilities can be computed efficiently. Note that last($g$) in line 9 is a function that returns the last label of $g$.

Thus, the one-pass method can exclude partial hypotheses with irregular alignments by the CTC score during the beam search, and hopefully reduces the number of search errors with less computation compared to the rescoring method. The search error means that the most probable hypothesis is missed by the beam search. In this case, an alternative hypothesis with a less score is obtained instead of the best hypothesis, where the alternative hypothesis generally contains more recognition errors than the best one.

**Network training**

In the training phase, all the network parameters 203, 205 and 209 are jointly optimized to reduce the loss function:

$$\mathcal{L}(\mathbf{X}, \mathbf{Y}, \Phi) = \sum_{n=1}^{N} \lambda \log p_{\text{ctc}}(Y_n | X_n, \Phi) + (1 - \lambda) \log p_{\text{att}}(Y_n | X_n, \Phi), \tag{47}$$

where $\mathbf{X}$ and $\mathbf{Y}$ are training data including acoustic feature sequences and label sequences. $\Phi$ denotes a set of network parameters. $N$ is the number of training samples, $X_n$ and $Y_n$ are the n-th acoustic feature sequence and the corresponding label sequence in the training data, respectively. $p_{\text{ctc}}(Y_n | X_n, \Phi)$ is the CTC-based sequence probability and $p_{\text{att}}(Y_n | X_n, \Phi)$ is the attention-based sequence probability. The network parameters may be optimized by a stochastic gradient descent method.

The training procedure jointly optimizes the encoder, decoder, and CTC networks. But this method just uses the CTC network to regularize the encoder and the decoder parameters for attention-based end-to-end speech recognition of a prior art. The CTC network is abandoned after training, and not used in the recognition phrase. In the method of the invention, the CTC network is used to predict the sequence probability $p(Y|X)$ in the recognition phase, which reduces the recognition errors. This is one of significant advantages of embodiments of the present disclosure.

**End-to-end speech recognition apparatus**

FIG. 4 shows a block diagram of an end-to-end speech recognition system 400 according to some embodiments of the invention. The end-to-end speech recognition system 400 includes a human machine interface (HMI) 410 connectable with a keyboard 411 and a pointing device/medium 412, one or more processor 420, a storage device 430, a memory 440, a network interface controller 450 (NIC) connectable with a network 490 including local area networks and internet network, a display interface 460, an audio interface 470 connectable with a microphone device 475, a printer interface 480 connectable with a printing device 485. The memory 440 may be one or more memory units. The end-to-end speech recognition system 400 can receive electric audio waveform/spectrum data 495 via the network 490 connected to the NIC 450. The storage device 430 includes an end-to-end speech recognition module 200, an attention decoder network module 204, an encoder network module 202, a CTC module 208, and an acoustic feature extraction module 434. A label sequence search module, encoder network parameters, decoder network parameters and CTC network parameters are omitted in the figure. The pointing device/medium 412 may include modules that read programs stored on a computer readable recording medium. The attention decoder network module 204, the encoder network module 202, and the CTC module 208 may be formed by neural network parameters. The acoustic feature extraction module 434 is a program used to extract an acoustic feature sequence from. The acoustic feature sequence may be a sequence of mel-scale filterbank coefficients with their first and second order temporal derivatives and/or pitch features.

For performing the end-to-end speech recognition, instructions may be transmitted to the end-to-end speech recognition system 400 using the keyboard 411, the pointing device/medium 412 or via the network 490 connected to other computers (not shown in the figure). The system 400 receives instructions via the HMI 410 and executes the instructions for performing end-to-end speech recognition using the processor 420 in connection with the memory 440 by loading the end-to-end speech recognition module 200, the attention decoder network module 204, the encoder network module 202, the CTC module 208, and the acoustic feature extraction module 434 stored in the storage device 430.

## Evaluation results

We used Japanese and Mandarin Chinese speech recognition benchmarks to show the effectiveness of the invention.

## Corpus of Spontaneous Japanese (CSJ)

We demonstrated speech recognition experiments by using the Corpus of Spontaneous Japanese (CSJ: MAEKAWA, K., KOISO, H., FURUI, S., AND ISAHARA, H. Spontaneous speech corpus of Japanese. In International Conference on Language Resources and Evaluation (LREC) (2000), vol. 2, pp. 947-952.). CSJ is a standard Japanese speech recognition task based on a collection of monologue speech data including academic lectures and simulated presentations. It has a total of 581 hours of training data and three types of evaluation data (Task1, Task2, Task3), where each evaluation task consists of 10 lectures (totally 5 hours). As input features, we used 40 mel-scale filterbank coefficients, with their first and second order temporal derivatives to obtain a total of 120-dimensional feature vector per frame. The encoder was a 4-layer BLSTM with 320 cells in each layer and direction, and a linear projection layer was followed by each BLSTM layer. The 2nd and 3rd bottom layers of the encoder read every second hidden vector in the network below, reducing the utterance length by the factor of 4. We used the location-based attention mechanism, where the 10 centered convolution filters of width 100 were used to extract the convolutional features. The decoder network was a 1-layer LSTM with 320 cells. The AdaDelta algorithm with gradient clipping was used for the optimization. The encoder, decoder and CTC networks are trained in a multi-task learning approach, where the scaling factor $\lambda$ was set to 0.1.

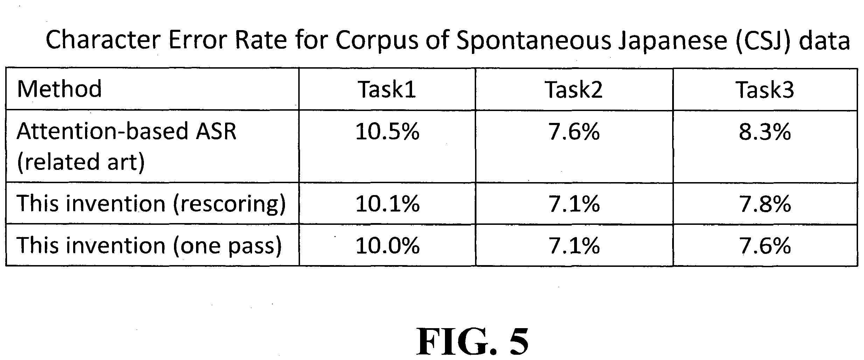

FIG. 5 compares the character error rate (CER) for conventional attention-based speech recognition and the invention. The table in FIG. 5 shows that CERs of the prior art are reduced by this invention in all three tasks, where scaling factor $\lambda$ was set to 0.1. In the invention, the one-pass method was slightly better than the rescoring method in Task1 and Task3.

## Mandarin telephone speech

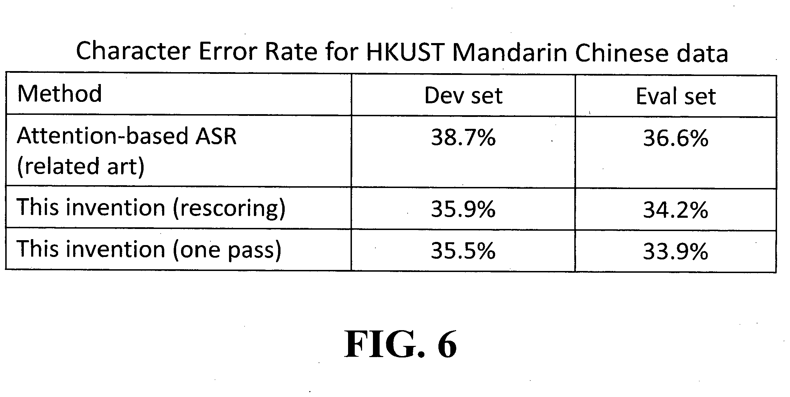

We demonstrated experiments on HKUST Mandarin Chinese conversational telephone speech recognition (MTS). It has 5 hours recording for evaluation (Eval set), and we extracted 5 hours from training data as a development set (Dev set), and used the rest (167 hours) as a training set. All experimental conditions were same as those in the CSJ experiments except that we used the $\lambda = 0.5$ in training and decoding instead of 0.1 based on our preliminary investigation and 80 mel-scale filterbank coefficients with pitch features. FIG. 6 shows the effectiveness of the invention over the attention-based method of a prior art. In both development and evaluation sets, CERs are significantly reduced. As well as the CSJ experiments, the one-pass method was slightly better than the rescoring method in the both sets.
In some embodiments of the present disclosure, when the end-to-end speech recognition system described above is installed in a computer system, speech recognition can be effectively and accurately performed with less computing power, thus the use of the end-to-end speech recognition method or system of the present disclosure can reduce central processing unit usage and power consumption.
Further, embodiments according to the present disclosure provide and effective method for performing end-to-end speech recognitions, thus, the use of a method and system using the end-to-end speech recognition model can reduce central processing unit (CPU) usage, power consumption and/or network band width usage.
The above-described embodiments of the present disclosure can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.
Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Further, the embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as first, second, in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

**Claims**

1. A speech recognition system comprising:

   an input device to receive voice sounds;
   one or more processors; and
   one or more storage devices storing parameters and program modules including instructions executable by the one or more processors which, when executed, cause the one or more processors to perform operations comprising:

      extracting, using an acoustic feature extraction module, an acoustic feature sequence from audio waveform data converted from the voice sounds;
      encoding the acoustic feature sequence into a hidden vector sequence using an encoder network having encoder network parameters;
      predicting first output label sequence probabilities by feeding the hidden vector sequence to a decoder network having decoder network parameters;

   **characterized by**
   the instructions executable by the one or more processors which, when executed, cause the one or more processors to perform operations comprising:

      predicting second output label sequence probabilities by a connectionist temporal classification (CTC) module using CTC network parameters and the hidden vector sequence from the encoder network; and
      searching, using a label sequence search module, for an output label sequence having a highest sequence probability by combining the first and second output label sequence probabilities provided from the decoder network and the CTC module.

2. The speech recognition system of claim 1, wherein the decoder network receives a previous label from the label sequence search module before predicting the first output label sequence probabilities.

3. The speech recognition system of claim 1, wherein the CTC module receives a previous label from the label sequence search module before predicting the second output label sequence probabilities.

4. The speech recognition system of claim 1, wherein the encoder network includes stacked Bidirectional Long Short-Term Memories (BLSTMs).

5. The speech recognition system of claim 1, wherein the decoder network includes stacked Long Short-Term Memories (LSTMs) and uses an attention mechanism for the hidden vector sequence to predict each of the output label sequence probabilities.

6. The speech recognition system of claim 1, wherein a linear combination in logarithmic domain is used for combining the first and second output label sequence probabilities.

7. The speech recognition system of claim 1, wherein the searching uses a beam search to find the output label sequence with the highest sequence probability obtained by combining the first and second output label sequence probabilities provided from the decoder network and the CTC module.

8. The speech recognition system of claim 7, wherein the beam search first finds a set of complete label sequence hypotheses using the first label sequence probabilities provided from the decoder network, and then finds, from among the set of complete label sequence hypotheses, the output label sequence with the highest sequence probability obtained by combining the first and second output label sequence probabilities provided from the decoder network and the CTC module.

9. The speech recognition system of claim 7, wherein the beam search prunes incomplete label sequence hypotheses with a low sequence probability compared to the other incomplete label sequence hypotheses, and the sequence probabilities are obtained by combining the first and second output label sequence probabilities provided from the decoder network and the CTC module.

10. The speech recoginjtion system of claim 1, wherein the CTC module computes posterior probability distributions using the CTC network parameters and a dynamic programming technique for predicting the second output label sequence probabilities.

11. A method for speech recognition, comprising:

extracting, using an acoustic feature extraction module, an acoustic feature sequence from audio waveform data converted from voice sounds received by an input device;
encoding the acoustic feature sequence into a hidden vector sequence using an encoder network acquiring encoder network parameters from one or more storage devices;
predicting first output label sequence probabilities by feeding the hidden vector sequence to a decoder network acquiring decoder network parameters from the one or more storage devices;
**characterized by**
predicting second output label sequence probabilities by a connectionist temporal classification (CTC) module using CTC network parameters and the hidden vector sequence from the encoder network; and
searching, using a label sequence search module, for an output label sequence having a highest sequence probability by combining the first and second output label sequence probabilities provided from the decoder network and the CTC module.

12. The method of claim 11, wherein the decoder network receives a previous label from the label sequence search module before predicting the first output label sequence probabilities.

13. The method of claim 11, wherein the CTC module receives a previous label from the label sequence search module before predicting the second output label sequence probabilities.

14. The method of claim 11, wherein the encoder network includes stacked Bidirectional Long Short-Term Memories (BLSTMs).

15. The method of claim 11, wherein the decoder network includes stacked Long Short-Term Memories (LSTMs) and uses an attention mechanism for the hidden vector sequence to predict each of the output label sequence probabilities.

16. The method of claim 11, wherein a linear combination in logarithmic domain is used for combining the first and second output label sequence probabilities.

17. The method of claim 11, wherein the searching uses a beam search to find the output label sequence with the highest sequence probability obtained by combining the first and second output label sequence probabilities provided from the decoder network and the CTC module.

18. The method of claim 17, wherein the beam search first finds a set of complete label sequence hypotheses using the first label sequence probabilities provided from the decoder network, and then finds, from among the set of complete label sequence hypotheses, the output label sequence with the highest sequence probability obtained by combining the first and second output label sequence probabilities provided from the decoder network and the CTC module.

19. The method of claim 17, wherein the beam search prunes incomplete label sequence hypotheses with a low sequence probability compared to the other incomplete label sequence hypotheses, and the sequence probabilities are obtained by combining the first and second output label sequence probabilities provided from the decoder network and the CTC module.

20. The method of claim 11, wherein the CTC module computes posterior probability distributions using the CTC network parameters and a dynamic programming technique for predicting the second output label sequence probabilities.


**Patentansprüche**

1. Spracherkennungssystem, umfassend:

eine Eingabeeinrichtung, um Sprachlaute zu empfangen;
einen oder mehrere Prozessoren; und
eine oder mehrere Speichereinrichtungen, die Parameter und Programmmodule speichern, die Anweisungen enthalten, die durch den einen oder die mehreren Prozessoren ausführbar sind und die, bei Ausführung, den einen oder die mehreren Prozessoren veranlassen, Operationen durchzuführen, die umfassen:

Extrahieren, unter Verwendung eines Moduls zur Extraktion akustischer Merkmale, einer Sequenz akustischer Merkmale aus Audiowellenformdaten, die aus den Sprachlauten konvertiert wurden;
Encodieren der Sequenz akustischer Merkmale in eine Sequenz verborgener Vektoren unter Verwendung eines Encodernetzwerks mit Encodernetzwerkparametern;
Vorhersagen erster Ausgabelabelsequenzwahrscheinlichkeiten durch Einspeisen der Sequenz verborgener Vektoren in ein Decodernetzwerk mit Decodernetzwerkparametern;
**gekennzeichnet durch**
die Anweisungen, die durch den einen oder die mehreren Prozessoren ausführbar sind und die, bei Ausführung, den einen oder die mehreren Prozessoren veranlassen, Operationen durchzuführen, die umfassen:

Vorhersagen zweiter Ausgabelabelsequenzwahrscheinlichkeiten durch ein Konnektionistisches-Zeitliches-Klassifikations-(CTC)-Modul unter Verwendung von CTC-Netzwerkparametern und der Sequenz verborgener Vektoren von dem Encodernetzwerk; und
Suchen, unter Verwendung eines Labelsequenzsuchmoduls, nach einer Ausgabelabelsequenz mit einer höchsten Sequenzwahrscheinlichkeit durch Kombinieren der von dem Decodernetzwerk und dem CTC-Modul bereitgestellten ersten und zweiten Ausgabelabelsequenzwahrscheinlichkeiten.

2. Spracherkennungssystem nach Anspruch 1, wobei das Decodernetzwerk ein vorheriges Label vom Labelsequenzsuchmodul empfängt vor Vorhersagen der ersten Ausgabelabelsequenzwahrscheinlichkeiten.

3. Spracherkennungssystem nach Anspruch 1, wobei das CTC-Modul ein vorheriges Label von dem Labelsequenzsuchmodul empfängt vor Vorhersagen der zweiten Ausgabelabelsequenzwahrscheinlichkeiten.

4. Spracherkennungssystem nach Anspruch 1, wobei das Encodernetzwerk gestapelte bidirektionale Lang-Kurzzeit-Speicher (BLSTMs) enthält.

5. Spracherkennungssystem nach Anspruch 1, wobei das Decodernetzwerk gestapelte Lang-Kurzzeit-Speicher (LSTMs) enthält und einen Aufmerksamkeitsmechanismus für die Sequenz verborgener Vektoren verwendet, um jede der Ausgabelabelsequenzwahrscheinlichkeiten vorherzusagen.

6. Spracherkennungssystem nach Anspruch 1, wobei eine lineare Kombination in logarithmischer Domäne verwendet wird zum Kombinieren der ersten und zweiten Ausgabelabelsequenzwahrscheinlichkeiten.

7. Spracherkennungssystem nach Anspruch 1, wobei das Suchen eine Strahlsuche (Beam Search) verwendet, um die Ausgabelabelsequenz mit der höchsten Sequenzwahrscheinlichkeit zu finden, die durch Kombinieren der von dem Decodernetzwerk und dem CTC-Modul bereitgestellten ersten und zweiten Ausgabelabelsequenzwahrscheinlichkeiten erhalten wurde.

8. Spracherkennungssystem nach Anspruch 7, wobei die Strahlsuche zunächst eine Gruppe von vollständigen Labelsequenzhypothesen findet unter Verwendung der von dem Decodernetzwerk bereitgestellten ersten Labelsequenzwahrscheinlichkeiten und dann aus der Gruppe vollständiger Labelsequenzhypothesen die Ausgabelabelsequenz mit der höchsten Sequenzwahrscheinlichkeit findet, die durch Kombinieren der von dem Decodernetzwerk und dem CTC-Modul bereitgestellten ersten und zweiten Ausgabelabelsequenzwahrscheinlichkeiten erhalten wurde.

9. Spracherkennungssystem nach Anspruch 7, wobei die Strahlsuche unvollständige Labelsequenzhypothesen mit einer geringen Sequenzwahrscheinlichkeit im Vergleich zu den anderen unvollständigen Labelsequenzhypothesen beschneidet und die Sequenzwahrscheinlichkeiten erhalten werden durch Kombinieren der von dem Decodernetzwerk und dem CTC-Modul bereitgestellten ersten und zweiten Ausgabelabelsequenzwahrscheinlichkeiten.

10. Spracherkennungssystem nach Anspruch 1, wobei das CTC-Modul posteriore Wahrscheinlichkeitsverteilungen berechnet unter Verwendung der CTC-Netzwerkparameter und einer dynamischen Programmiertechnik zum Vorhersagen der zweiten Ausgabelabelsequenzwahrscheinlichkeiten.

11. Verfahren zur Spracherkennung, umfassend:

Extrahieren, unter Verwendung eines Moduls zur Extraktion akustischer Merkmale, einer Sequenz akustischer Merkmale aus Audiowellenformdaten, die aus Sprachlauten, die von einer Eingabeeinrichtung empfangen wurden, konvertiert sind;
Encodieren der Sequenz akustischer Merkmale in eine Sequenz verborgener Vektoren unter Verwendung eines Encodernetzwerks, erwerbend Encodernetzwerkparameter aus einer oder mehreren Speichereinrichtungen;
Vorhersagen erster Ausgabelabelsequenzwahrscheinlichkeiten durch Einspeisen der Sequenz verborgener Vektoren in ein Decodernetzwerk, erwerbend Decodernetzwerkparameter aus der einen oder den mehreren Speichereinrichtungen;
**gekennzeichnet durch**
Vorhersagen zweiter Ausgabelabelsequenzwahrscheinlichkeiten durch ein Konnektionistisches-Zeitliches-Klassifikations-(CTC)-Modul unter Verwendung von CTC-Netzwerkparametern und der Sequenz verborgener Vektoren von dem Encodernetzwerk; und
Suchen, unter Verwendung eines Labelsequenzsuchmoduls, nach einer Ausgabelabelsequenz mit einer höchsten Sequenzwahrscheinlichkeit durch Kombinieren der von dem Decodernetzwerk und dem CTC-Modul bereitgestellten ersten und zweiten Ausgabelabelsequenzwahrscheinlichkeiten.

12. Verfahren nach Anspruch 11, wobei das Decodernetzwerk ein vorheriges Label von dem Labelsequenzsuchmodul empfängt vor dem Vorhersagen der ersten Ausgabelabelsequenzwahrscheinlichkeiten.

13. Verfahren nach Anspruch 11, wobei das CTC-Modul ein vorheriges Label von dem Labelsequenzsuchmodul empfängt vor dem Vorhersagen der zweiten Ausgabelabelsequenzwahrscheinlichkeiten.

14. Verfahren nach Anspruch 11, wobei das Encodernetzwerk gestapelte Bidirektionale Lang-Kurzzeit-Speicher (BLSTMs) enthält.

15. Verfahren nach Anspruch 11, wobei das Decodernetzwerk gestapelte Lang-Kurzzeit-Speicher (LSTMs) enthält und einen Aufmerksamkeitsmechanismus für die Sequenz verborgener Vektoren verwendet, um jede der Ausgabelabelsequenzwahrscheinlichkeiten vorherzusagen.

16. Verfahren nach Anspruch 11, wobei eine lineare Kombination in der logarithmischen Domäne zum Kombinieren der ersten und zweiten Ausgabelabelsequenzwahrscheinlichkeiten verwendet wird.

17. Verfahren nach Anspruch 11, wobei die Suchen eine Strahlsuche verwendet, um die Ausgabelabelsequenz mit der höchsten Sequenzwahrscheinlichkeit zu finden, die durch Kombinieren der von dem Decodernetzwerk und dem CTC-Modul bereitgestellten ersten und zweiten Ausgabelabelsequenzwahrscheinlichkeiten erhalten wurde.

18. Verfahren nach Anspruch 17, wobei die Strahlsuche zunächst eine Gruppe von vollständigen Labelsequenzhypothesen findet unter Verwendung der von dem Decodernetzwerk bereitgestellten ersten Labelsequenzwahrscheinlichkeiten, und dann aus der Gruppe vollständiger Labelsequenzhypothesen die Ausgabelabelsequenz mit der höchsten Sequenzwahrscheinlichkeit findet, die durch Kombinieren der von dem Decodernetzwerk und dem CTC-Modul bereitgestellten ersten und zweiten Ausgabelabelsequenzwahrscheinlichkeiten erhalten wurde.

19. Verfahren nach Anspruch 17, wobei die Strahlsuche unvollständige Labelsequenzhypothesen mit einer geringen Sequenzwahrscheinlichkeit im Vergleich zu den anderen unvollständigen Labelsequenzhypothesen beschneidet und die Sequenzwahrscheinlichkeiten durch Kombinieren der vom Decodernetzwerk und dem CTC-Modul bereitgestellten ersten und zweiten Ausgabelabelsequenzwahrscheinlichkeiten erhalten werden.

20. Verfahren nach Anspruch 11, wobei das CTC-Modul posteriore Wahrscheinlichkeitsverteilungen berechnet unter Verwendung der CTC-Netzwerkparameter und einer dynamischen Programmiertechnik zum Vorhersagen der zweiten Ausgabelabelsequenzwahrscheinlichkeiten.

**Revendications**

1. Système de reconnaissance de la parole comprenant :

   un dispositif d'entrée destiné à recevoir des sons vocaux ;
   un ou plusieurs processeurs ; et
   un ou plusieurs dispositifs de stockage stockant des paramètres et des modules de programme incluant des instructions exécutables par ledit ou lesdits processeurs qui, lorsqu'elles sont exécutées, amènent ledit ou lesdits processeurs à mettre en oeuvre des opérations comprenant les étapes ci-dessous consistant à :

   extraire, en faisant appel à un module d'extraction de caractéristiques acoustiques, une séquence de caractéristiques acoustiques, de données de forme d'onde audio converties à partir des sons vocaux ;
   coder la séquence de caractéristiques acoustiques en une séquence vectorielle cachée, en faisant appel à un réseau codeur présentant des paramètres de réseau codeur ;
   prédire des premières probabilités de séquences d'étiquettes de sortie en appliquant la séquence vectorielle cachée à un réseau décodeur présentant des paramètres de réseau décodeur;
   **caractérisé par**
   les instructions exécutables par ledit ou lesdits processeurs qui, lorsqu'elles sont exécutées, amènent ledit ou lesdits processeurs à mettre en oeuvre des opérations comprenant les étapes ci-dessous consistant à :

   prédire des secondes probabilités de séquences d'étiquettes de sortie au moyen d'un module de classification temporelle connexionniste (CTC) utilisant des paramètres de réseau de classification CTC et la séquence vectorielle cachée du réseau codeur ; et
   rechercher, en faisant appel à un module de recherche de séquences d'étiquettes, une séquence d'étiquettes de sortie présentant une probabilité de séquence la plus élevée en combinant les premières et secondes probabilités de séquences d'étiquettes de sortie fournies à partir du réseau décodeur et du module de classification CTC.

2. Système de reconnaissance de la parole selon la revendication 1, dans lequel le réseau décodeur reçoit une étiquette précédente en provenance du module de recherche de séquences d'étiquettes avant de prédire les premières probabilités de séquences d'étiquettes de sortie.

3. Système de reconnaissance de la parole selon la revendication 1, dans lequel le module de classification CTC reçoit une étiquette précédente en provenance du module de recherche de séquences d'étiquettes avant de prédire les secondes probabilités de séquences d'étiquettes de sortie.

4. Système de reconnaissance de la parole selon la revendication 1, dans lequel le réseau codeur inclut des mémoires longues à court terme bidirectionnelles empilées (BLSTM).

5. Système de reconnaissance de la parole selon la revendication 1, dans lequel le réseau décodeur inclut des mémoires longues à court terme empilées (LSTM) et utilise un mécanisme d'attention pour la séquence vectorielle cachée, afin de prédire chacune des probabilités de séquences d'étiquettes de sortie.

6. Système de reconnaissance de la parole selon la revendication 1, dans lequel une combinaison linéaire dans le domaine logarithmique est utilisée en vue de combiner les premières et secondes probabilités de séquences d'étiquettes de sortie.

7. Système de reconnaissance de la parole selon la revendication 1, dans lequel l'étape de recherche fait appel à une recherche en faisceau pour trouver la séquence d'étiquettes de sortie présentant la probabilité de séquence la plus élevée obtenue en combinant les premières et secondes probabilités de séquences d'étiquettes de sortie fournies à partir du réseau décodeur et du module de classification CTC.

8. Système de reconnaissance de la parole selon la revendication 7, dans lequel la recherche en faisceau trouve tout d'abord un ensemble d'hypothèses de séquences d'étiquettes complètes en utilisant les premières probabilités de séquences d'étiquettes fournies à partir du réseau décodeur, et trouve ensuite, parmi l'ensemble d'hypothèses de séquences d'étiquettes complètes, la séquence d'étiquettes de sortie présentant la probabilité de séquence la plus élevée obtenue en combinant les premières et secondes probabilités de séquences d'étiquettes de sortie fournies à partir du réseau décodeur et du module de classification CTC.

9. Système de reconnaissance de la parole selon la revendication 7, dans lequel la recherche en faisceau élague des hypothèses de séquences d'étiquettes incomplètes avec une probabilité de séquence faible par rapport aux autres hypothèses de séquences d'étiquettes incomplètes, et les probabilités de séquences sont obtenues en combinant les premières et secondes probabilités de séquences d'étiquettes de sortie fournies à partir du réseau décodeur et du module de classification CTC.

10. Système de reconnaissance de la parole selon la revendication 1, dans lequel le module de classification CTC calcule des distributions de probabilités postérieures en utilisant les paramètres de réseau de classification CTC et une technique de programmation dynamique pour prédire les secondes probabilités de séquences d'étiquettes de sortie.

11. Procédé de reconnaissance de la parole, comprenant les étapes ci-dessous consistant à :

extraire, en faisant appel à un module d'extraction de caractéristiques acoustiques, une séquence de caractéristiques acoustiques, de données de forme d'onde audio converties à partir des sons vocaux reçus par un dispositif d'entrée ;
coder la séquence de caractéristiques acoustiques en une séquence vectorielle cachée, en faisant appel à un réseau codeur qui acquiert des paramètres de réseau codeur auprès d'un ou de plusieurs dispositifs de stockage ;
prédire des premières probabilités de séquences d'étiquettes de sortie en appliquant la séquence vectorielle cachée à un réseau décodeur qui acquiert des paramètres de réseau décodeur auprès dudit ou desdits dispositifs de stockage ;
**caractérisé par** les étapes ci-dessous consistant à
prédire des secondes probabilités de séquences d'étiquettes de sortie au moyen d'un module de classification temporelle connexionniste (CTC) utilisant des paramètres de réseau de classification CTC et la séquence vectorielle cachée du réseau codeur ; et
rechercher, en faisant appel à un module de recherche de séquences d'étiquettes, une séquence d'étiquettes de sortie présentant une probabilité de séquence la plus élevée en combinant les premières et secondes probabilités de séquences d'étiquettes de sortie fournies à partir du réseau décodeur et du module de classification CTC.

12. Procédé selon la revendication 11, dans lequel le réseau décodeur reçoit une étiquette précédente en provenance du module de recherche de séquences d'étiquettes avant de prédire les premières probabilités de séquences d'étiquettes de sortie.

13. Procédé selon la revendication 11, dans lequel le module de classification CTC reçoit une étiquette précédente en provenance du module de recherche de séquences d'étiquettes avant de prédire les secondes probabilités de séquences d'étiquettes de sortie.

14. Procédé selon la revendication 11, dans lequel le réseau codeur inclut des mémoires longues à court terme bidirectionnelles empilées (BLSTM).

15. Procédé selon la revendication 11, dans lequel le réseau décodeur inclut des mémoires longues à court terme empilées (LSTM) et utilise un mécanisme d'attention pour la séquence vectorielle cachée, afin de prédire chacune des probabilités de séquences d'étiquettes de sortie.

16. Procédé selon la revendication 11, dans lequel une combinaison linéaire dans le domaine logarithmique est utilisée en vue de combiner les premières et secondes probabilités de séquences d'étiquettes de sortie.

**17.** Procédé selon la revendication 11, dans lequel l'étape de recherche fait appel à une recherche en faisceau pour trouver la séquence d'étiquettes de sortie présentant la probabilité de séquence la plus élevée obtenue en combinant les premières et secondes probabilités de séquences d'étiquettes de sortie fournies à partir du réseau décodeur et du module de classification CTC.

**18.** Procédé selon la revendication 17, dans lequel la recherche en faisceau trouve tout d'abord un ensemble d'hypothèses de séquences d'étiquettes complètes en utilisant les premières probabilités de séquences d'étiquettes fournies à partir du réseau décodeur, et trouve ensuite, parmi l'ensemble d'hypothèses de séquences d'étiquettes complètes, la séquence d'étiquettes de sortie présentant la probabilité de séquence la plus élevée obtenue en combinant les premières et secondes probabilités de séquences d'étiquettes de sortie fournies à partir du réseau décodeur et du module de classification CTC.

**19.** Procédé selon la revendication 17, dans lequel la recherche en faisceau élague des hypothèses de séquences d'étiquettes incomplètes avec une probabilité de séquence faible par rapport aux autres hypothèses de séquences d'étiquettes incomplètes, et les probabilités de séquences sont obtenues en combinant les premières et secondes probabilités de séquences d'étiquettes de sortie fournies à partir du réseau décodeur et du module de classification CTC.

**20.** Procédé selon la revendication 11, dans lequel le module de classification CTC calcule des distributions de probabilités postérieures en utilisant les paramètres de réseau de classification CTC et une technique de programmation dynamique pour prédire les secondes probabilités de séquences d'étiquettes de sortie.

Output Label Sequence — 107

Label Sequence
Search Module
106

Attention
Decoder Module
104

Encoder Module
102

Decoder
Network
Parameters
105

Encoder
Network
Parameters
103

Acoustic Feature Sequence
101
Related Art

100

**FIG. 1**

EP 3 417 451 B1

Output Label Sequence —— 207

Label Sequence Search Module —— 206

Attention Decoder Network Module —— 204

Encoder Network Module —— 202

CTC Module —— 208

Decoder Network Parameters —— 205

Encoder Network Parameters —— 203

CTC Network Parameters —— 209

Acoustic Feature Sequence —— 201

200

## FIG. 2

300

CTC Module

208

Decoder Network Module

204

Encoder Network Module

202

**FIG. 3**

FIG. 4

Character Error Rate for Corpus of Spontaneous Japanese (CSJ) data

| Method | Task1 | Task2 | Task3 |
|---|---|---|---|
| Attention-based ASR (related art) | 10.5% | 7.6% | 8.3% |
| This invention (rescoring) | 10.1% | 7.1% | 7.8% |
| This invention (one pass) | 10.0% | 7.1% | 7.6% |

**FIG. 5**

EP 3 417 451 B1

Character Error Rate for HKUST Mandarin Chinese data

| Method | Dev set | Eval set |
| --- | --- | --- |
| Attention-based ASR (related art) | 38.7% | 36.6% |
| This invention (rescoring) | 35.9% | 34.2% |
| This invention (one pass) | 35.5% | 33.9% |

**FIG. 6**

EP 3 417 451 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20170011738 A1

**Non-patent literature cited in the description**

• **SUYOUN KIM ; TAKAAKI HORI ; SHINJI WATANABE.** *Joint CTC-Attention Based End-to-End Speech Recognition Using Multi-Task Learning*

• **MAEKAWA, K. ; KOISO, H. ; FURUI, S. ; ISAHARA, H.** In International Conference on Language Resources and Evaluation (LREC). *Spontaneous speech corpus of Japanese.,* 2000, vol. 2, 947-952